# EUROPEAN PATENT APPLICATION

(11) **EP 1 298 523 A1**
(43) Date of publication of application: **02.04.2003**
(21) Application number: 01906239.7
(22) Date of filing: 23.02.2001
(51) Int. Cl.: G06F 9/06, G01G 19/387

(54) **COMBINED WEIGHING DEVICE AND SYSTEM USING REPLACEABLE CONTROL PROGRAM**

(30) Priority: 28.02.2000 JP 2000051356
(71) Applicant: Yamato Scale Co., Ltd., Akashi-shi, Hyogo 673-8688 (JP)
(72) Inventor: YAMASHITA, Kazuhiko, Akashi-shi, Hyogo 673-8688 (JP); TAKIMOTO, Masafumi, Akashi-shi, Hyogo 673-8688 (JP)
(74) Representative: Brown, Kenneth Richard
(86) International application number: JP0101338
(87) International publication number: WO01063407

(57) **Abstract**

A weighing machine constituted by a plurality of weighing units, and a weighing machine control portion for performing a centralized control of these weighing units are provided. The respective weighing units and the weighing machine are communicatively interconnected. The weighing machine control portion comprises a CPU, a main memory, a flash memory, a display such as a liquid crystal display, and a key input device such as a key board, and a communication device is connected to the weighing machine control portion. In replacement of the control program, the communication device is connected to Internet and a new control program is downloaded from the server computer to a temporary storage area of the flash memory. The new program is transferred to a control program area of the main memory and executed by the CPU. Thus, a combination weighing apparatus and a combination weighing system in which the control program is replaceable via the communication medium such as Internet are provided.

## Description

### Technical Field

The present invention relates to a combination weighing apparatus and a combination weighing system. More particularly, the present invention relates to a program-distributable combination weighing apparatus and a combination weighing system in which the combination weighing apparatus and a server computer are connected by means of a communication medium such as Internet.

### Background Art

Conventionally, combination weighing apparatuses are installed in various places and used. In general, the combination weighing apparatus is controlled using a microcomputer. In the combination weighing apparatus, it is important to set an appropriate operating condition thereof and log an operating state thereof in order to maintain a normal operation of the weighing apparatus, avoid a failure thereof, or quickly restore the apparatus from the failure.

In the combination weighing apparatus controlled by the microcomputer, in order to employ an improved function or an added new function or correct a defect, it sometimes becomes necessary to replace a program thereof by a new program, similarly to other microcomputer-controlled equipment.

When the new program is provided by a PROM, it is necessary to turn off the power of the corresponding combination weighing apparatus, open a casing, or the like, in order to replace a PROM in which an old program is written by the PROM of the new program. When the program is provided by a mask ROM instead of the PROM, a board itself needs to be replaced because the mask ROM is generally mounted to the board. Also in this case, it is necessary to turn off the power of the corresponding combination weighing apparatus, open the casing, or the like. Further, in the recent combination weighing apparatus in which processes by programs are distributed, since the programs must be replaced in a plurality of portions, a required number of PROMs that contain programs for replacement or a required number of boards to which mask ROMs are mounted must be prepared and replaced one by one. Besides, to open the casings or replace the boards for the purpose of replacement of the programs, at least a driver or tool or the like are inevitably needed.

When the program of the microcomputer-controlled combination weighing apparatus is provided by the PROM as described above, it is necessary to turn off the power of the combination weighing apparatus, open the casing, or the like to replace the PROM of the old program by the PROM in which the new program is written, for the purpose of introducing the improved or added function, introducing the new function, correcting the defect, or the like. However, in general, the PROM is a package in a DIP format. So, in replacement, a mounting defect such as deformed pins might occur, or the package might be mounted upside down and a power might be turned on, causing the PROM or the board to be broken in the worst case. Therefore, the greatest care should be always taken in replacement of the PROM. If it takes some time to replace the PROM, production must be stopped for the time.

When the program is provided by the mask ROM instead of the PROM, the board itself must be replaced. Therefore, in many cases, it takes further time to remove or mount the mask ROM. Also, the old program stored in the replaced mask ROM must be discarded when it is judged unusable, which is disadvantageously costly.

In addition, in the recent combination weighing apparatus in which the processes by programs are distributed, since the programs are stored in a plurality of portions, a required number of PROMs in which the programs for replacement are written or a required number of boards to which the mask ROMs are mounted must be prepared and replaced one by one, the production must be stopped for several hours.

Further, for the above-described replacement of the programs, replacement parts, for example, a set of PROMs in which new programs are written, boards, a set of tools used for replacement, or the like, must be mailed to a customer. This results in a cost of the replacement parts and a cost of delivery. Moreover, in a case where the production at the customer must be stopped by the fact that the parts needs to be replaced due to a fatal defect, a loss is caused by the stopped production during a wait period before the parts being delivered arrive there. To prevent the worst case, in most cases, a person in charge quickly carries the set of replacement parts to the customer. In such cases, however, a traveling expense of the person in charge, a labor cost of the person in charge, or the like are needed.

The present invention is directed to solving the above-described conventional problems, and an object of the present invention is to provide a combination weighing apparatus and a combination weighing system in which a control program is replaceable via a communication medium such as Internet.

### DISCLOSURE OF THE INVENTION

A program-distributable combination weighing apparatus of the present invention comprises a weighing machine including a plurality of weighing units constituting the combination weighing apparatus, a communication device for receiving a predetermined control program via a communication medium, and a weighing machine control portion for controlling an operation of the weighing machine according to the control program. With this configuration, the control program can be replaced without opening a casing of the combination weighing apparatus and in a very short time.

The communication device in the program-distributable combination weighing apparatus of the present invention performs communication via the communication medium selected from the group consisting of a local area network, a wide area network, a public line, Internet, a value added network, a commercial network, and combinations thereof. Since the program-distributable combination weighing apparatus of the present invention can use such general communication media, the control program can be replaced without providing a dedicated line.

The communication device can be connected to the communication medium and is generally selected from the group consisting of a modem, a terminal adapter, and a router.

The program-distributable combination weighing apparatus of the present invention may further comprise temporary storage means for storing the control program received via the communication medium. The temporary storage means enables the control program received via the communication medium to be stored without being executed immediately and to be replaced when necessary.

The program-distributable combination weighing apparatus of the present invention may further comprise control program storage means for storing the control program executed by the weighing machine control portion and control program saving means for saving the control program stored in the control program storage means. The program-distributable combination weighing apparatus may further comprise control program returning means for returning the control program saved in the control program saving means to the control program storage means. With this configuration, when a defect is found in a received new program, or a wrong program is received and executed, it is possible to easily return a previous program.

Further, the program-distributable combination weighing apparatus of the present invention is capable of receiving the control program using a protocol selected from the group consisting of TCP/IP, IPX/SPX, NetBEUI, NetBIOS, and AppleTalk. The use of these protocols enables communication via a widely used communication medium such as Internet.

The present invention is applied to the combination weighing apparatus in which the plurality of weighing units are respectively provided with unit control portions. In this case, the control program received by the communication device includes unit control programs for controlling the weighing units. The weighing machine control portion is capable of distributing the unit control programs received by the communication device to the respective unit control portions. With this configuration, the unit control programs stored in the plurality of portions can be replaced simultaneously and quickly.

A program-distributable combination weighing system of the present invention comprises a combination weighing apparatus including a weighing machine having a plurality of weighing units constituting the combination weighing apparatus, a communication device for receiving a predetermined control program via a communication medium, and a weighing machine control portion for controlling an operation of the weighing machine according to the control program; a server computer that includes a central communication device for performing communication with the communication device and distributes the control program; and a communication medium via which communication is performed between the communication device and the central communication device. With this configuration, a new control program can be received from the server computer and the control program being used until then can be replaced by the new program without opening the casing of the combination weighing apparatus and in a very short time.

The communication device of the combination weighing apparatus in the program-distributable combination weighing system of the present invention performs communication via the communication medium selected from the group consisting of a local area network, a wide area network, a public line, Internet, a value added network, a commercial network, and combinations thereof. Since these general communication media can be employed in the present invention, the control program can be replaced without providing a dedicated line.

Similarly to the above, the communication device can be connected to the communication medium and is generally selected from the group consisting of a modem, a terminal adapter, and a router.

The combination weighing apparatus in the program-distributable combination weighing system of the present invention may further comprise temporary storage means for storing the control program received via the communication medium. The temporary storage means enables the control program received from the server computer via the communication medium to be stored without being executed immediately and to be replaced when necessary.

The combination weighing apparatus in the program-distributable combination weighing system of the present invention may further comprise control program storage means for storing the control program and control program saving means for saving the control program stored in the control program storage means. The combination weighing apparatus may further comprise control program returning means for returning the control program saved in the control program saving means to the control program storage means. With this configuration, when a defect is found in a received new program, or a wrong program is received and executed, it is possible to easily return a previous program.

Furthermore, between the combination weighing apparatus and the sever computer in the system of the present invention, the control program can be transmitted/received using a protocol selected from the group consisting of TCP/IP, IPX/SPX, NetBEUI, NetBIOS, and AppleTalk. The use of these protocols enables communication via a widely used communication medium such as Internet.

According to the present invention, in the combination weighing system in which the plurality of weighing units are respectively provided with unit control portions, the control program received by the communication device of the combination weighing apparatus includes unit control programs for controlling the weighing units, and the weighing machine control portion is capable of distributing the unit control programs received by the communication device to the respective unit control portions. Thereby, the control programs stored in the plurality of portions can be easily replaced.

While it should be noted that a storage device such as an EEPROM, a flash memory, a silicon disc, a hard disc, or the like, which is rewritable and capable of keeping its content unerased after a power is turned off, must be used, as the control program storage means, the control program saving means, and the temporary storage means of the present invention, the flash memory is preferably used in view of an access speed, a price, and a vibration-proof characteristic.

As described above, in the program-distributable combination weighing apparatus and the combination weighing system of the present invention, since the control program can be replaced via the communication medium such as Internet, the control program can be replaced without opening the casing of the combination weighing apparatus and in a very short time. Specifically, in the present invention, since the program can be updated in a moment of time via the Internet only by a key operation, it is not necessary to turn off the power and open the casing, and consequently, the tool or time for it is unnecessary. In addition, since the entire board need not be replaced unlike the mask ROM, a tool or time for it is unnecessary. Also, differently from the PROM, the replacement need not be performed with care, and the problems that the pin is deformed by mistake, or the PROM is mounted upside down, causing the PROM or the board to be broken, do not arise.

The updating operation of the program does not stop the production at the customer over a long time period because most of the updating operation is completed in time during which the new program is read from the connected server computer and in the subsequent time during which the combination weighing apparatus is restarted.

### BRIEF DESCRIPTION OF THE DRAWINGS

Fig. 1 is a block diagram showing a program-distributable combination weighing system according to an embodiment of the present invention;
Fig. 2 is a block diagram showing a combination weighing system according to another embodiment of the present invention;
Fig. 3 is a block diagram showing a combination weighing system according to a further embodiment of the present invention;
Fig. 4 is a flowchart showing a process executed when a control program is replaced;
Fig. 5 is a flowchart showing an initial starting operation in power on according to the embodiment;
Fig. 6 is a flowchart showing an operation for returning the control program;
Fig. 7 is a view showing storage areas in a main memory and a flash memory in the combination weighing system according to the embodiment; and
Fig. 8 is a block diagram showing a program-distributable combination weighing system in which a plurality of combination weighing apparatuses of Fig. 3 according to the embodiment of the present invention, are connected to configure a system.

### BEST MODE FOR CARRYING OUT THE INVENTION

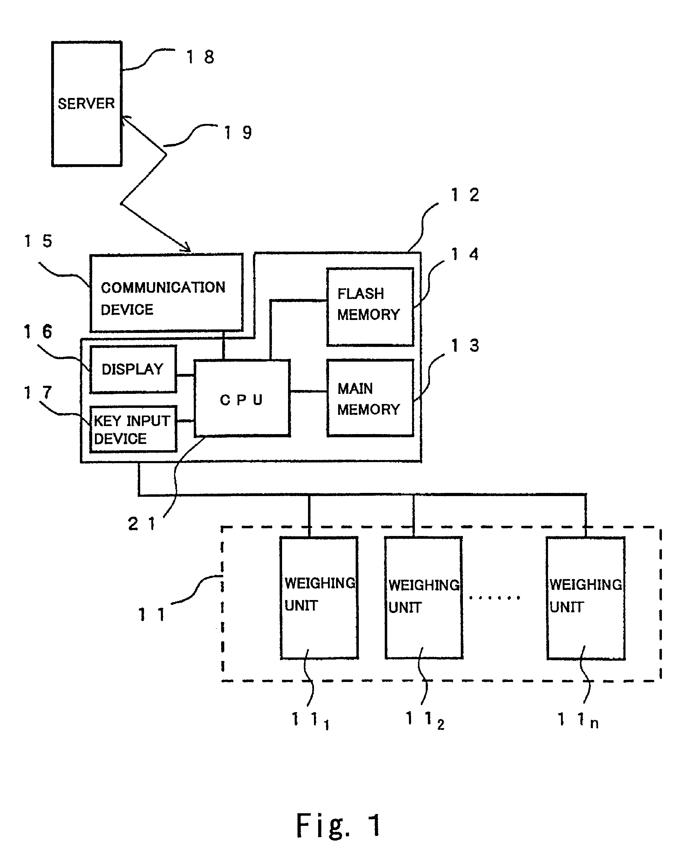

Hereinafter, embodiments of the present invention will be described with reference to drawings. Fig. 1 is a block diagram showing a program-distributable combination weighing system according to an embodiment of the present invention. The combination weighing system of this embodiment comprises a weighing machine 11 constituted by a plurality of weighing units 11₁, 11₂, ... 11ₙ, and a weighing machine control portion 12 for performing a centralized control of these weighing units. The weighing machine control portion 12 comprises a CPU 21, a main memory 13, a flash memory 14, a display 16 such as a liquid crystal display, and a key input device 17 such as a key board. In this embodiment, a communication device 15 is connected to the weighing machine control portion 12. In this embodiment, the communication device 15 can be connected to Internet 19 by a public line such as a telephone line, ISDN, or the like, and can be further connected to a server computer 18 for supplying the control program, by the Internet 19. In this embodiment, the communication device 15 is connected to the Internet 19 using TCP/IP protocol.

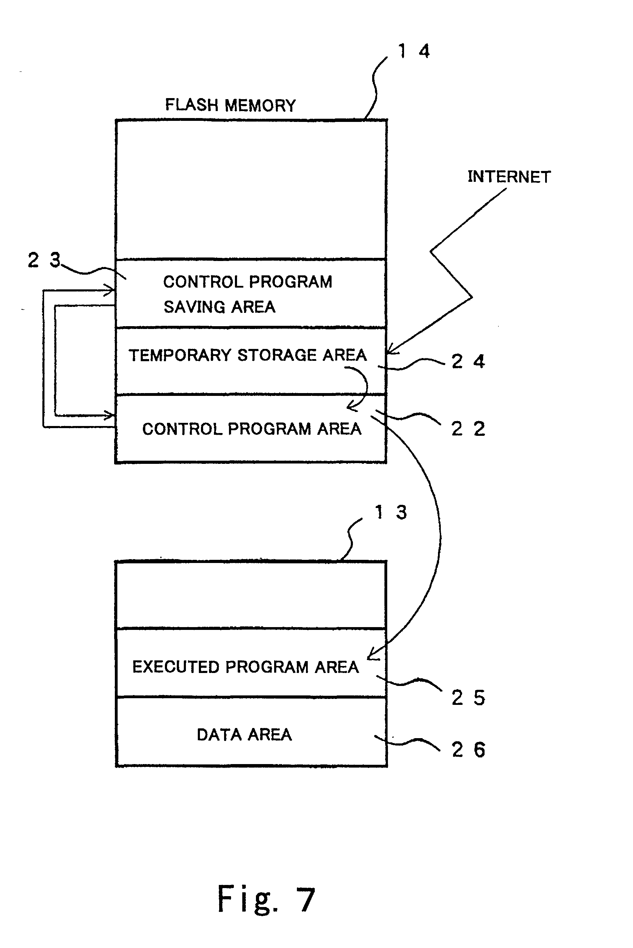

Fig. 7 is a view showing storage areas of the main memory 13 and the flash memory 14 in the combination weighing system according to the embodiment. The flash memory 14 is a memory in which its stored content is retained without being erased after a power of the weighing machine control portion 12 is turned off. As shown in Fig. 7, the flash memory 14 has a control program area 22, a control program saving area 23 and a temporary storage area 24 mentioned later. The main memory 13 has an executed program area 25 in which the control program executed by the CPU 21 of the weighing machine control portion 12 is executed and a data area 26 in which data required for executing the control program or temporary data is temporarily stored.

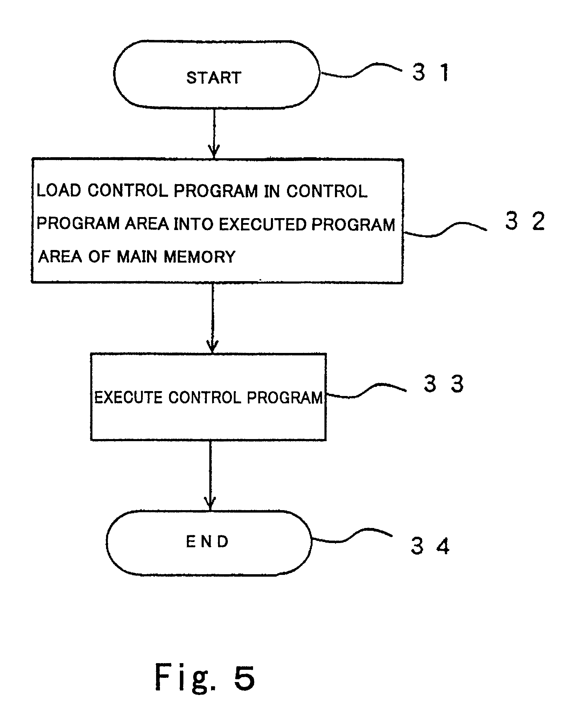

Fig. 5 shows an initial starting operation of the weighing machine control portion 12 in power on according to this embodiment. As shown in Fig. 5, first of all, in Step 31, processing starts. Then, in Step 32, the control program is loaded from the control program area 22 of the flash memory 14 (Fig. 1 and Fig. 7) into the executed program area 25 on the main memory 13 (Fig. 1 and Fig. 7). Further, in Step 33, the control program stored in the executed program area 25 is executed by the CPU 21. By execution of the control program by the CPU 21, the weighing units 11₁ - 11ₙ perform operations as the combination weighing apparatus. Then, in Step 34, the processing ends. Thus, in the combination weighing apparatus of this embodiment, the control program is always loaded from the flash memory 14 into the main memory 13 and then executed by the CPU 21.

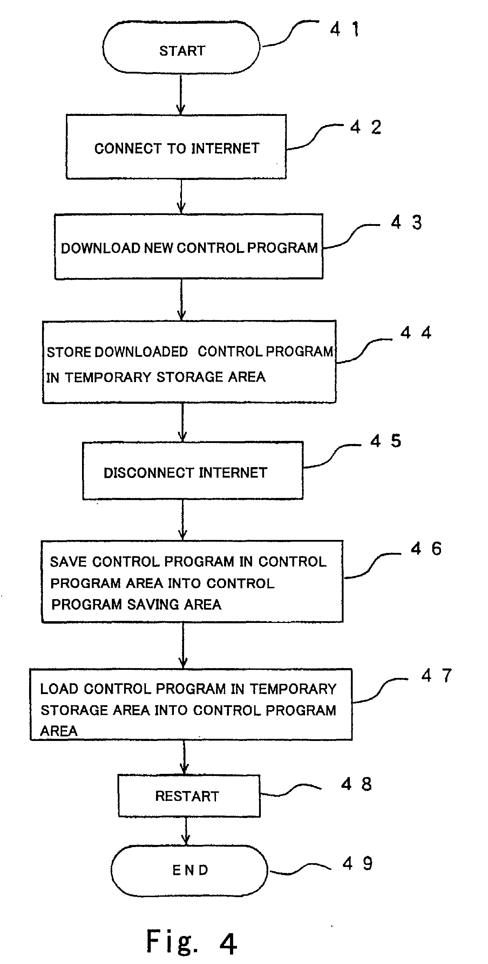

Subsequently, a case where the replacement of the control program is required in the combination weighing system of this embodiment will be described. Fig. 4 shows a flowchart executed when the control program is replaced. First of all, in Step 41, processing starts. Then, in Step 42, a connection to the Internet 19 is made by the communication device 15, thereby enabling the communication with the server computer 18. Then, in Step 43, a new control program is downloaded from the server computer 18. Thereafter, in Step 45, the Internet 19 is disconnected.

The control program downloaded from the server computer 18 via the Internet 19 is first stored in the temporary storage area 24 as shown in Fig. 7. Then, in Step 46, the control program stored in the control program area 22 is transferred to the control program saving area 23 and saved therein. Further, in Step 47, the new control program stored in the temporary storage area 24 is transferred to the control program area 22. At this point, the new program is not executed by the CPU 21 but is executed by the CPU 21 of the weighing machine control portion 12 by the restarting of the combination weighing apparatus in Step 48. The restarting in Step 48 is performed according to the flowchart of Fig. 5. Finally, in Step 49, the processing ends and the replacement of the control program is completed.

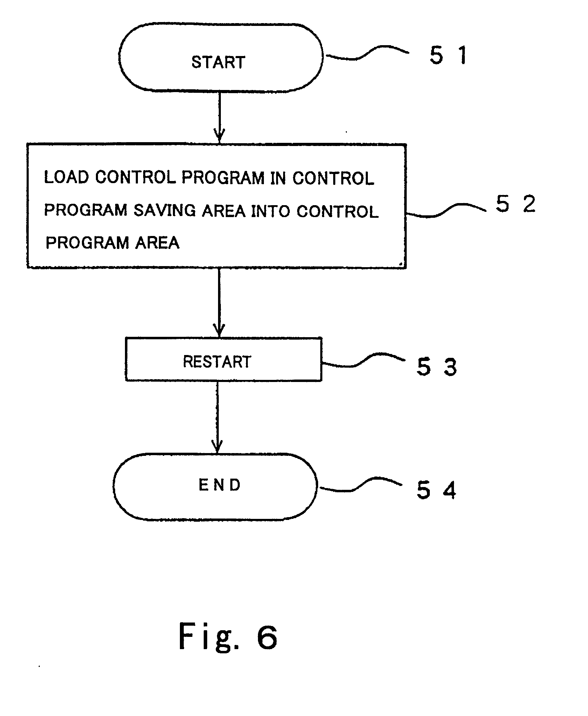

Subsequently, a case where the previous control program needs to be returned due to an improper operation or the like of the newly introduced control program in the combination weighing system of this embodiment, will be described. Fig. 6 shows a flowchart in which the previous control program is returned. As shown in Fig. 6, first of all, in Step 51, processing starts, and then in Step 52, the previous program stored in the control program saving area 23 is transferred to the control program area 22. In this case, the control program stored in the control program area 22 is overwritten. At this point, the new control program is not executed by the CPU 21 but is executed by the CPU 21 of the weighing machine control portion 12 by the restarting of the combination weighing apparatus in Step 53. The restarting in Step 53 is performed according to the flowchart in Fig. 5. Finally, in Step 54, the processing ends.

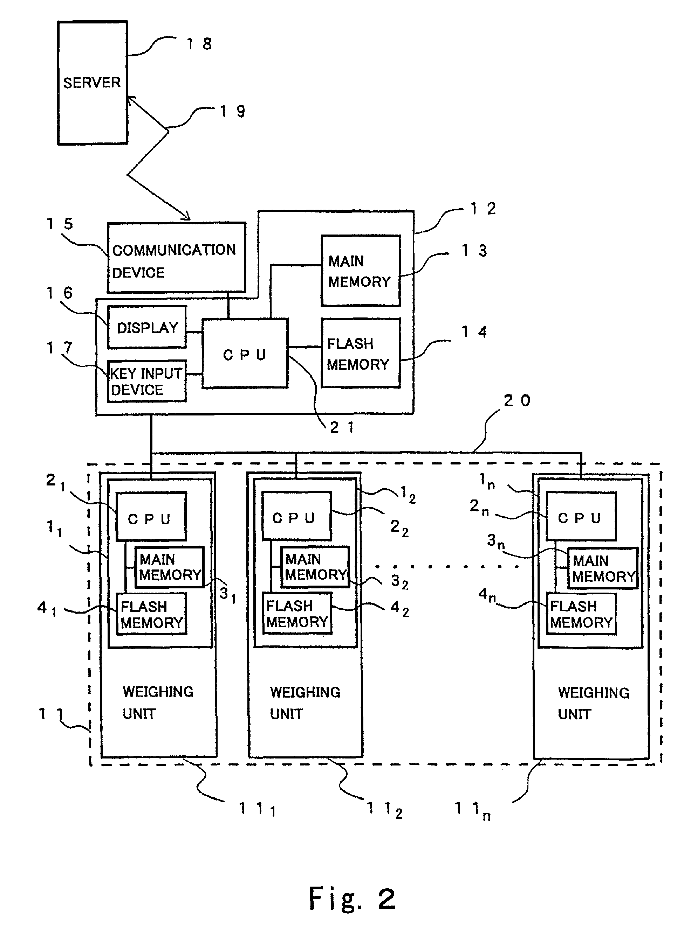

Fig. 2 shows a combination weighing system according to another embodiment of the present invention. In the combination weighing system of this embodiment, the weighing units 11₁ - 11ₙ constituting the weighing machine 11 are respectively provided with unit control portions 1₁ - 1ₙ. This embodiment is identical to the embodiment of Fig. 1 except that the weighing machine control portion 12 is connected to each of the unit control portions 1₁ - 1ₙ by means of a high-speed communication line 20, and the corresponding components are referenced to by the same reference numerals. The unit control portion 1₁ has a CPU2₁, a main memory 3₁, and a flash memory 4₁, the unit control portion 1₂ has a CPU2₂, a main memory 3₂, and a flash memory 4₂, ..., and the unit control portion 1ₙ has a CPU2ₙ, a main memory 3ₙ, and a flash memory 4ₙ. In this embodiment, unit control programs for controlling the respective weighing units 11₁ - 11ₙ are respectively stored in the flash memories 4₁, 4₂, ...4ₙ. The unit control programs stored in the flash memories 4₁, 4₂, ...4ₙ are loaded into the respective main memories 3₁, 3₂, ...3ₙ at the initial starting by power on, and executed by the respective CPU 2₁, 2₂, ...2ₙ, as described above with reference to the flowchart of Fig. 5 and Fig. 7.

In this embodiment, the unit control programs stored in the flash memories 4ᵢ, 4₂, ...4ₙ were initially included in the control program and are loaded from the weighing machine control portion 12 into the main memories 3₁, 3₂, ... 3ₙ and the flash memories 4₁, 4₂, ... 4ₙ of the respective unit control portions 1₁ - 1ₙ through the high-speed communication mechanism 20 when the control program is newly introduced into the control program area 22 of the flash memory 14 and the weighing machine control portion 12 is restarted. In this embodiment, similarly to an example of Fig. 1, the control program including the unit control programs can be downloaded from the server computer 18 via the Internet 19 and stored in the control program area 22 of the flash memory 14.

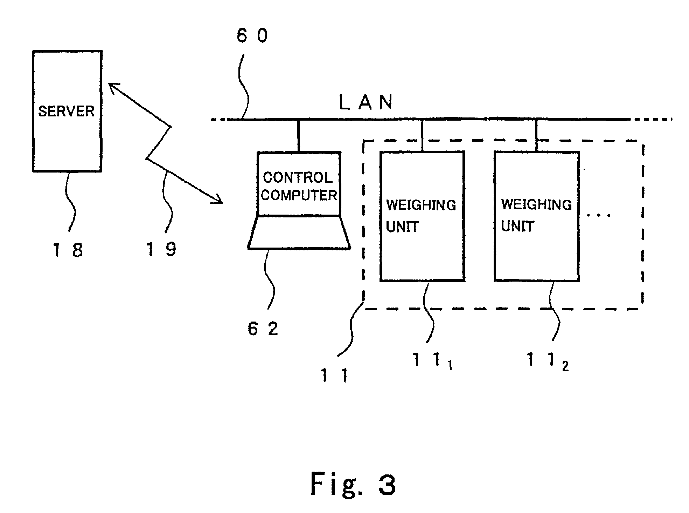

Fig. 3 is a block configuration showing a combination weighing system according to a further embodiment of the present invention. In the combination weighing system of this embodiment, the weighing units 11₁ - 11ₙ constituting the weighing machine 11 and a control computer 62 are interconnected by LAN (local area network) 60. The control computer 62 functions as the weighing machine control portion 12 and a communication device provided in the control computer 62 performs a communication function. Since a general computer can be used in this configuration, the combination weighing system can be easily configured.

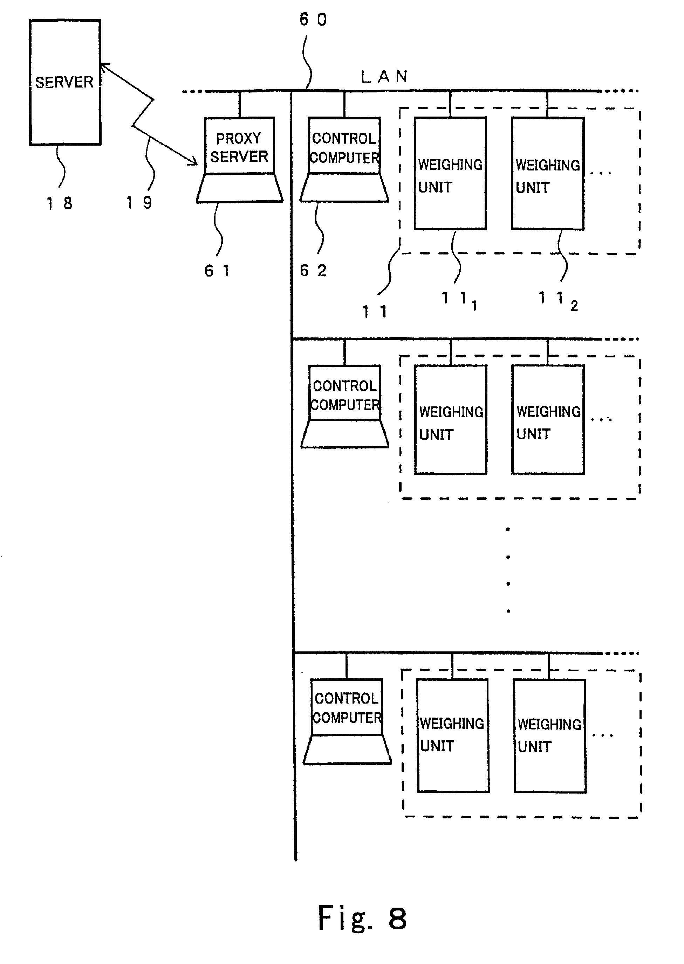

Fig. 8 is a block configuration of the combination weighing system according to another embodiment of the present invention. In the combination weighing system of this embodiment, a plurality of LAN-connected combination weighing apparatuses of Fig. 3 are provided and further connected by LAN, and a Proxy server 61 provided on the LAN allows these combination weighing apparatuses to be connected to the server computer 18 by the Internet 19. In this configuration, since the general LAN using the general computer is applicable to the combination weighing system, a large-scaled combination weighing system can be easily configured. Such configuration of the Proxy server is also applicable to the configurations in which a plurality of combination weighing apparatuses of Fig. 1 or 2 are provided. Specifically, the weighing machine control portions 12 of a plurality of combination weighing apparatuses can be connected by LAN which is provided with a Proxy server, and connected to Internet by the Proxy server.

It is preferable that the control program to be downloaded has a compressed format, although this is not described above. The compressed format of the control program advantageously reduces the time required for downloading.

## Claims

1. A program-distributable combination weighing apparatus comprising:
a weighing machine including a plurality of weighing units constituting the combination weighing apparatus;
a communication device for receiving a predetermined control program via a communication medium; and
a weighing machine control portion for controlling an operation of the weighing machine according to the control program.

2. The program-distributable combination weighing apparatus according to Claim 1, wherein the communication medium is selected from the group consisting of a local area network, a wide area network, a public line, Internet, a value added network, a commercial network, and combinations thereof.

3. The program-distributable combination weighing apparatus according to Claim 1 or 2, wherein the communication device is selected from the group consisting of a modem, a terminal adapter, and a router.

4. The program-distributable combination weighing apparatus according to any of Claims 1 to 3, further comprising temporary storage means for storing the control program received via the communication medium.

5. The program-distributable combination weighing apparatus according to Claim 4, further comprising control program storage means for storing the control program executed by the weighing machine control portion and control program saving means for saving the control program stored in the control program storage means.

6. The program-distributable combination weighing apparatus according to Claim 5, further comprising control program returning means for returning the control program saved in the control program saving means to the control program storage means.

7. The program-distributable combination weighing apparatus according to any of Claims 1 to 6, wherein the communication device receives the control program using a protocol selected from the group consisting of TCP/IP, IPX/SPX, NetBEUI, NetBIOS, and AppleTalk.

8. The program-distributable combination weighing apparatus according to any of Claims 1 to 7, wherein the plurality of weighing units are respectively provided with unit control portions, the control program received by the communication device includes unit control programs for controlling the weighing units, and the weighing machine control portion distributes the unit control programs received by the communication device to the respective unit control portions.

9. A combination weighing system comprising:
a combination weighing apparatus including a weighing machine having a plurality of weighing units constituting the combination weighing apparatus, a communication device for receiving a predetermined program via a communication medium, and a weighing machine control portion for controlling an operation of the weighing machine according to the control program;
a server computer that includes a central communication device for performing communication with the communication device and distributes the control program; and
a communication medium via which communication is performed between the communication device and the central communication device.

10. The combination weighing system according to Claim 9, wherein the communication medium is selected from the group consisting of a local area network, a wide area network, a public line, Internet, a value added network, a commercial network, and combinations thereof.

11. The combination weighing system according to Claim 9 or 10, wherein the communication device of the combination weighing apparatus is selected from the group consisting of a modem, a terminal adapter, and a router.

12. The combination weighing system according to any of Claims 9 to 11, wherein the combination weighing apparatus further includes temporary storage means for storing the control program received via the communication medium.

13. The combination weighing system according to Claim 12, wherein the combination weighing apparatus further includes control program storage means for storing the control program executed by the weighing machine control portion and control program saving means for saving the control program stored in the control program storage means.

14. The program-distributable combination weighing system according to Claim 13, further comprising control program returning means for returning the control program saved in the control program saving means to the control program storage means .

15. The combination weighing system according to any of Claims 9 to 14, wherein the communication device receives the control program using a protocol selected from the group consisting of TCP/IP, IPX/SPX, NetBEUI, NetBIOS, and AppleTalk.

16. The combination weighing system according to any of Claims 9 to 15, wherein unit control portions for respectively controlling the plurality of weighing units are provided, the control program received by the communication device includes unit control programs for controlling the weighing units, and the weighing machine control portion distributes the unit control programs included in the control program received by the communication device to the respective unit control portions.
